# EUROPÄISCHE PATENTSCHRIFT

(11) **EP 4 487 687 B1**
(45) Veröffentlichungstag und Bekanntmachung des Hinweises auf die Patenterteilung: **30.04.2025**
(21) Anmeldenummer: 23183391.4
(22) Anmeldetag: 04.07.2023
(51) Int. Cl.: A21C 9/08, B65G 47/32

(54) **VORRICHTUNG UND VERFAHREN ZUM SEPARIEREN VON TEIGSTÜCKEN**
DEVICE AND METHOD FOR SEPARATING PIECES OF DOUGH
DISPOSITIF ET PROCÉDÉ DE SÉPARATION DE MORCEAUX DE PÂTE

(43) Veröffentlichungstag der Anmeldung: 08.01.2025
(73) Patentinhaber: Rondo Burgdorf AG, 3400 Burgdorf (CH)
(72) Erfinder: Schüpbach, Luca, 3550 Langnau i.E. (CH); Bargen, Andreas, 3418 Rüegsbach (CH); Siffert, Nicolas, 3182 Ueberstorf (CH); Besson, Marc, 3400 Burgdorf (CH)
(74) Vertreter: Keller Schneider Patent- und Markenanwälte AG

(56) Entgegenhaltungen:
- EP-B1- 0 284 835
- CA-A1- 2 271 175
- CN-U- 210 960 149
- DE-A1- 1 761 695
- GB-A- 1 403 045
- JP-A- 2000 316 463
- US-A- 3 187 873
- US-A- 5 634 549

## Beschreibung

### Technisches Gebiet

Die Erfindung betrifft eine Vorrichtung sowie ein Verfahren zum Separieren von Teigstücken, welche auf einer Fördervorrichtung aufliegen. Ferner betrifft die vorliegende Erfindung ein System umfassend eine derartige Vorrichtung.

### Stand der Technik

Bei der Teigverarbeitung wird üblicherweise ein vorzugsweise vorgängig kalibrierter Teig in einzelne Teigstücke gestanzt oder geschnitten. Für die weitere Verarbeitung dieser Teigstücke, z.B. durch Aufrollen derselben ist es von Vorteil, wenn der Abstand zwischen den Teigstücken vergrössert werden kann.

Im Stand der Technik sind bereits Vorrichtungen bekannt, mit denen zuvor gestanzte oder geschnittene Teigstücke separiert werden können. Die CN 210960149 U offenbart beispielsweise eine derartige Vorrichtung, welche eine Fördervorrichtung umfasst, die über zwei Förderbänder verfügt, die mit unterschiedlichen Geschwindigkeiten angetrieben werden. Beim Übergang zwischen den beiden Förderbändern sind Druckroller oberhalb der Förderbänder angeordnet, welche die Teigstücke vom ersten Förderband auf das zweite Förderband bewegen.

Die JP 2000-316463 A beschreibt eine Vorrichtung zum Separieren von Teiglingen. Die Vorrichtung verfügt über zwei Förderbänder, welche mit unterschiedlichen Geschwindigkeiten laufen, wobei im Bereich des Überganges zwischen den beiden Förderbändern oberhalb von diesen eine drehende Welle angeordnet ist, welche die auf den Förderbändern geförderten Teiglinge von oben erfasst und diese vom ersten Förderband auf das zweite Förderband bewegt.

Die US 5,634,549 B2 offenbart eine Vorrichtung zum Fördern und Sortieren vor Gegenständen, insbesondere einer Vorrichtung zum Vergrössern der Anzahl an Reihen der Gegenstände auf einer Fördervorrichtung. Die Vorrichtung umfasst ein Vereinzelungselement, insbesondere ein rotierendes Vereinzelungselement mit einer Welle, von welcher mehrere Paddel abstehen. Ferner verfügt die Vorrichtung über ein rotierendes Verschiebeelement, welches in Förderrichtung nach dem Vereinzelungselement angeordnet ist. Die Gegenstände werden durch das Vereinzelungselement in definierten Abständen angeordnet und anschliessend dem Verschiebeelement zugeführt, welches die Gegenstände auf definierte Positionen nebeneinander ablenkt. Die Paddel des Vereinzelungselements sind in regelmässigen Winkelabständen auf der Welle angeordnet und radial relativ zur Welle entgegen einer Federkraft in Richtung der Drehachse von letzterer verschiebbar gelagert. Das Verschiebeelement verfügt über eine Welle mit radial von dieser abstehende Speichen. Die Welle des Verschiebeelements weist eine geringere Drehgeschwindigkeit auf, als die Fördervorrichtung, so dass die Speichen den Gegenständen im Wege stehen, wodurch die Gegenstände von den Speichen zur Seite geschoben werden.

Die EP 0 284 835 B1 beschreibt ein Verfahren sowie eine Vorrichtung zum Ausrichten von in uregelmässigen Abständen zulaufenden Süsswarenstücken auf einem Förderband. Die Vorrichtung umfasst eine Mehrzahl von Querstäben, welche von einer drehbaren Welle, die oberhalb des Förderbandes angeordnet ist, abstehen, und welche die Süsswarenstücke auf dem Förderband abbremsen, bis der Versatz der Süsswarenstücke in einer Reihe beseitigt ist. Der Abstand der Süsswarenreihen sowie deren Versatz kann gemessen werden und die Drehung der Welle mit den Querstäben entsprechend der Messdaten gesteuert werden.

### Darstellung der Erfindung

Aufgabe der Erfindung ist es, eine dem eingangs genannten technischen Gebiet zugehörende Vorrichtung zu schaffen, welche eine zuverlässige Separierung von Teigstücken ermöglicht und welche möglichst einfach aufgebaut und wartungsfreundlich ist.

Die Lösung der Aufgabe ist durch die Merkmale des Anspruchs 1 definiert. Gemäss der Erfindung umfasst die Vorrichtung zum Separieren von Teigstücken eine erste Fördervorrichtung und eine daran anschliessende zweite Fördervorrichtung, auf denen darauf aufliegende Teigstücke in einer Förderrichtung gefördert werden können. Die erste Fördervorrichtung wird mit einer ersten Geschwindigkeit und die zweite Fördervorrichtung wird mit einer zweiten Geschwindigkeit, die grösser ist als die erste Geschwindigkeit, angetrieben. Die Vorrichtung weist eine in einem ersten Abstand oberhalb des Übergangsbereichs der ersten Fördervorrichtung zur zweiten Fördervorrichtung angeordnete Welle auf, welche mittels eines Antriebes in eine Drehbewegung um eine Längsachse mit einer dritten Geschwindigkeit, die grösser ist als die erste Geschwindigkeit, versetzt werden kann. Die Welle erstreckt sich in einer Richtung quer zur Förderrichtung über eine gesamte Breite der beiden Fördervorrichtungen, wobei an der Welle mindestens ein radial von dieser abstehendes Mitnehmerelement angeordnet ist, welches an einem freien Ende, das von einer Oberfläche der Welle beabstandet ist, über eine Kontaktfläche verfügt. Das mindestens eine Mitnehmerelement ist in radialer Richtung relativ zur Welle und an dieser frei verschiebbar gelagert, so dass sich die Kontaktfläche des mindestens einen Mitnehmerelements durch die Drehbewegung der Welle um die Längsachse in Folge der Schwerkraft und des Eigengewichts des mindestens einen Mitnehmerelements in radialer Richtung zur Welle hin oder von dieser weg bewegt. Das mindestens eine Mitnehmerelement verfügt über eine Dimension, die derart ist, dass die Kontaktfläche auf einem auf der ersten Fördervorrichtung aufliegendes Teigstück aufliegen kann, um dieses mit der dritten Geschwindigkeit von der ersten Fördervorrichtung auf die zweite Fördervorrichtung zu schieben.

Die erfindungsgemässe Vorrichtung verfügt über wenige bewegliche Teile, so dass diese im Wesentlichen wartungsfrei ist und sehr einfach gereinigt werden kann. Eine derartige Vorrichtung weist daher geringe Betriebskosten auf und kann auch einfach und kostengünstig hergestellt und betrieben werden. Durch die Verwendung des Eigengewichts beim Aufliegen der Kontaktfläche auf einem Teigstück kann die auf das Teigstück einwirkende Kraft minimiert werden, so dass das Teigstück möglichst nicht durch die darauf aufliegende Kontaktfläche deformiert wird.

Unter Separieren von Teigstücken wird vorliegende die Vergrösserung des Abstandes von in der Förderrichtung benachbarten Teigstücken voneinander verstanden. Bei der erfindungsgemässen Vorrichtung wird durch das Separieren demnach der Abstand benachbarter Teigstücke in der Förderrichtung vergrössert.

Als Teigstück wird vorliegend ein aus einem kalibrierten, das heisst auf eine vorbestimmte Dicke gebrachten Teig gestanztes oder geschnittenes Teil verstanden, welches eine beliebige Form aufweisen kann, wie beispielsweise dreieckig, viereckig, rund, oval oder polygonal. Die Teigstücke werden vorgängig vorzugsweise mittels eines Stanzwerkzeugs, eines Fallmessers oder einer Schneidwalze hergestellt, insbesondere mittels eines in Förderrichtung der Vorrichtung vorgelagerten Schneid- oder Stanzwerkzeugs.

Nach dem Separieren mittels der erfindungsgemässen Vorrichtung können die Teigstücke anschliessend zu Teiglingen, das heisst zu dreidimensional geformten Gebilden weiterverarbeitet werden, beispielsweise durch Rollen, Falten, Wickeln oder dergleichen.

Als Teig wird in der vorliegenden Anmeldung sowohl eine Mischung aus wenigstens einem Mehl mit mindestens einer Flüssigkeit verstanden wie auch teigartige Massen, wie zum Beispiel Marzipan oder Nussmassen. Die mittels der erfindungsgemässen Vorrichtung separierten Teigstücke können insbesondere aus Blätterteig, Biskuitteig, Filoteig, Hefeteig, Mürbeteig, etc. oder auch Nudelteig bestehen.

Die erste Fördervorrichtung und die zweite Fördervorrichtung sind vorzugsweise als Bandförderer ausgestaltet. Alternativ können die Fördervorrichtungen jedoch auch anders ausgestaltet sein, beispielsweise als Gliedförderer. Förderbänder oder Gliedförderer weisen ein Endlosband auf, welches an den Enden über Rollen um im Wesentlichen 180° umgelenkt wird. Demnach weisen derartige Fördervorrichtungen einen oberen Teil und einen unteren Teil auf, welche sich jeweils in entgegengesetzter Richtung bewegen. Im Rahmen der vorliegenden Anmeldung bezieht sich die Förderrichtung jeweils auf denjenigen Teil der Fördervorrichtung, auf dem die Teigstücke aufliegen können, demnach in der Regel auf den oberen Teil der Fördervorrichtung bzw. bei der bevorzugten Ausführung auf den oberen Teil des Endlosbandes.

Die beiden Fördervorrichtungen verfügen jeweils über einen Förderantrieb, mit welchem sich die Fördervorrichtungen mit der ersten bzw. zweiten Geschwindigkeit antreiben lassen. Alternativ kann für beide Fördervorrichtungen jedoch auch lediglich ein Förderantrieb verwendet werden, wobei die unterschiedlichen Geschwindigkeiten mittels mindestens eines Getriebes erzielt werden können.

Die erste Fördervorrichtung und die zweite Fördervorrichtung sind vorzugsweise derart angeordnet, dass diese dieselbe Höhe aufweisen. Das heisst, dass im Übergangsbereich kein Höhenunterschied zwischen der ersten Fördervorrichtung und der zweiten Fördervorrichtung vorliegt. Dadurch müssen die Teigstücke beim Schieben von der ersten Fördervorrichtung auf die zweite Fördervorrichtung keinen Höhenunterschied überwinden. Alternativ kann die zweite Fördervorrichtung jedoch relativ zur ersten Fördervorrichtung tiefer angeordnet sein. Bei der bevorzugten Ausführungsform, bei welcher die Fördervorrichtungen als Bandförderer vorliegen, bezieht sich die Höhenangabe jeweils auf den Teil des Endlosbandes, auf dem die Teigstücke aufliegen können, also in der Regel dem oberen Teil des Endlosbandes.

Die beiden Fördervorrichtungen weisen quer zur Förderrichtung beide vorzugsweise dieselbe Breite auf.

Die Welle kann als Vollwelle oder Hohlwelle ausgestaltet sein. Alternativ kann die Welle auch aus zwei Vollwellenteilen an deren Enden bestehen, welche mittels mehrerer, insbesondere zweier, Längsstäbe miteinander verbunden sind. Die Welle ist an der Vorrichtung drehbar gelagert und kann mittels des Antriebes um ihre Längsachse in Drehbewegung versetzt werden. Vorzugsweise ist die Welle an zwei Säulen oder Seitenwänden eines Rahmens der Vorrichtung, die seitlich neben der ersten Fördervorrichtung und allenfalls auch der zweiten Fördervorrichtung angeordnet sind, drehbar gelagert. Die Welle erstreckt sich quer zur Förderrichtung über die gesamte Breite der ersten Fördervorrichtung und der zweiten Fördervorrichtung. Dabei ist die Längsachse der Welle vorzugsweise im rechten Winkel zur Förderrichtung angeordnet.

Die Welle ist in einem ersten Abstand oberhalb eines Übergangbereichs der ersten Fördervorrichtung zur zweiten Fördervorrichtung angeordnet. Das heisst in einem Bereich, der sich über einem in Förderrichtung hinteren Ende der ersten Fördervorrichtung sowie einem in Förderrichtung vorderen Ende der zweiten Fördervorrichtung befindet. Die zweite Fördervorrichtung schliesst sich vorzugsweise bündig an die erste Fördervorrichtung an, das heisst, dass ein möglichst kleiner Spalt oder Abstand zwischen den beiden Fördervorrichtungen besteht. Die Längsachse der Welle ist vorzugsweise oberhalb dieses Spaltes oder Abstandes angeordnet. Der erste Abstand ist derart gewählt, dass die Teigstücke zwischen den Fördervorrichtungen und der Welle hindurch geschoben werden können. Das heisst, dass der Abstand derart gewählt ist, dass dieser grösser ist, als die Dicke der Teigstücke.

Der Antrieb der Welle ist vorzugsweise ein Drehantrieb, insbesondere ein Elektromotor, wie beispielsweise ein Servomotor oder ein Schrittmotor, oder ein Pneumatikmotor. Ein Abtrieb des Drehantriebs kann entweder direkt mit der Welle verbunden sein oder indirekt über ein Getriebe. Die Welle wird durch den Antrieb derart in Drehbewegung versetzt, dass der zur ersten Fördervorrichtung hin gerichtete Teil der Welle sich in der Förderrichtung bewegt.

Vorzugsweise verfügt der Antrieb der Welle über Einstellmittel oder eine Steuerung, mit welcher die dritte Geschwindigkeit der Drehbewegung der Welle eingestellt werden kann. Dies ermöglicht eine Abstimmung der dritten Geschwindigkeit der Welle auf die erste Geschwindigkeit, die zweite Geschwindigkeit und/oder auf die Grösse der Teigstücke, so dass sichergestellt werden kann, dass durch die Kontaktfläche des mindestens einen Mitnehmerelements alle in Förderrichtung hintereinander auf der ersten Fördervorrichtung aufliegenden Teigstücke auf die zweite Fördervorrichtung geschoben werden können.

Vorzugsweise entspricht die dritte Geschwindigkeit der zweiten Geschwindigkeit. Alternativ kann die dritte Geschwindigkeit jedoch auch grösser oder kleiner sein als die zweite Geschwindigkeit. Die dritte Geschwindigkeit ist jedoch stets grösser als die erste Geschwindigkeit.

Dadurch, dass die zweite Geschwindigkeit höher ist als die erste Geschwindigkeit, wird sichergestellt, dass die Separierung der Teigstücke, das heisst die Vergrösserung von deren Abständen in der Förderrichtung auf der zweiten Fördervorrichtung beibehalten wird.

Das mindestens eine Mitnehmerelement kann als geschlossene Fläche ausgestaltet sein oder alternativ als im Wesentlichen U-förmigen Bügel. Das mindestens eine Mitnehmerelement sowie dessen Kontaktfläche besteht vorzugsweise aus einem lebensmittelverträglichen Material, insbesondere einem Metall oder einem Kunststoff. Vorzugsweise ist das mindestens eine Mitnehmerelement einstückig ausgebildet. Alternativ kann das mindestens eine Mitnehmerelement jedoch auch aus mehreren miteinander verbundener Teile bestehen, welche entweder alle aus demselben Material oder aus unterschiedlichen Materialien bestehen. Vorzugsweise sind bei einem aus mehreren Teilen bestehenden Mitnehmerelement die Teile stoffschlüssig miteinander verbunden, z.B. durch Schweissen, damit möglichst keine Teigrückstände zwischen den Teilen haften bleiben und eine Reinigung des mindestens einen Mitnehmerelements möglichst einfach durchführbar ist.

Das mindestens eine Mitnehmerelement steht radial von der Welle ab. An der Welle kann auch mehr als ein Mitnehmerelement angeordnet sein, insbesondere zwei, drei, vier oder mehr Mitnehmerelemente. Sofern mehr als ein Mitnehmerelement an der Welle angeordnet ist, sind alle Mitnehmerelemente vorzugsweise gleich ausgebildet. Vorzugsweise ist das mindestens eine Mitnehmerelement lösbar an der Welle angeordnet, beispielsweise um dieses bei Abnutzung oder Beschädigung sowie zur Reinigung von der Welle entfernen zu können.

Das mindestens eine Mitnehmerelement erstreckt sich vorzugsweise im Wesentlichen entlang der gesamten Länge der Welle, das heisst im Wesentlichen entlang der gesamten Längsachse der Welle. Das freie Ende des mindestens einen Mitnehmerelements ist dasjenige Ende, welches von einer Oberfläche der Welle und damit auch von dessen Längsachse beabstandet ist. Dieses freie Ende des mindestens einen Mitnehmerelements liegt insbesondere in der Form einer Seitenkante des mindestens einen Mitnehmerelements vor.

Die Kontaktfläche des mindestens einen Mitnehmerelements ist zur Auflage auf mindestens einem auf der ersten Fördervorrichtung aufliegendes Teigstück ausgebildet. Hierzu verfügt die Kontaktfläche vorzugsweise über keine scharfen Kanten, um eine Deformation des Teigstücks zu verhindern. Die Kontaktfläche ist daher vorzugsweise im Wesentlichen flach ausgebildet und/oder verfügt über abgerundete Längskanten. Die Kontaktfläche verfügt in Förderrichtung vorzugsweise über eine Breite, die genügend gross ist, um auf ein Teigstück, auf welches die Kontaktfläche aufliegt, über die erste Fördervorrichtung zu schieben. Vorzugsweise ist die Kontaktfläche aus einem Material gefertigt, welches über eine möglichst grosse Haftreibung auf den Teigstücken verfügt, insbesondere einem Polymer. Die Kontaktfläche kann mit dem mindestens einen Mitnehmerelement einstückig ausgebildet sein oder als separates Teil vorliegen, welches mit dem Mitnehmerelement verbunden ist.

Das mindestens eine Mitnehmerelement ist relativ zur Welle in radialer Richtung frei verschiebbar gelagert. Das heisst, dass das mindestens eine Mitnehmerelement relativ zur Welle ohne Einwirkung einer irgendwie gearteten Kraft - mit Ausnahme der Schwerkraft - verschiebbar ist. Dies führt dazu, dass die Kontaktfläche des mindestens einen Mitnehmerelements aufgrund der Schwerkraft und des Eigengewichts des mindestens einen Mitnehmerelements je nach radialer Position des mindestens einen Mitnehmerelements um die Längsachse der Welle (die ja vom Antrieb in eine Drehbewegung versetzt wird) entweder von der Welle weg- oder zu dieser hinbewegt wird. Das heisst, dass bei einer Bewegung des mindestens einen Mitnehmerelements zur ersten Fördervorrichtung hin, sich die die Kontaktfläche aufgrund der Schwerkraft von der Welle weg- und zur ersten Fördervorrichtung hinbewegt. Dies ermöglicht es, dass die Kontaktfläche ab einer gewissen radialen Position des mindestens einen Mitnehmerelements um die Längsachse der Welle zur ersten Fördervorrichtung hinbewegt wird und dessen Kontaktfläche auf ein auf der ersten Fördervorrichtung liegendes Teigstück zur Auflage kommt. Beim Weiterdrehen der Welle kann das mindestens eine Mitnehmerelement, welches mit der dritten Geschwindigkeit der Welle bewegt wird, die höher ist als die erste Geschwindigkeit der ersten Fördervorrichtung, das Teigstück auf der ersten Fördervorrichtung mit der dritten Geschwindigkeit verschieben und auf die zweite Fördervorrichtung schieben.

Die Verschiebung wird dadurch ermöglicht, dass aufgrund des Eigengewichts des mindestens einen Mitnehmerelements die Kontaktfläche eine höhere Haftreibung auf das Teigstück auswirkt, als die Haftreibung zwischen dem Teigstück und der ersten Fördervorrichtung. Vorzugsweise verfügt die Kontaktfläche des mindestens einen Mitnehmerelement über mindestens ein Element, welches die Haftreibung zum Teigstück gegenüber der zweiten Fördervorrichtung erhöht oder besteht aus einem Material, welches über eine höhere Haftreibung zum Teigstück aufweist, als die erste Fördervorrichtung. Besonders bevorzugt sind die Materialien der Kontaktfläche des mindestens einen Mitnehmerelements sowie der ersten Fördervorrichtung aufeinander abgestimmt, so dass die Kontaktfläche eine höhere Haftreibung mit dem Teigstück aufweist, als die erste Fördervorrichtung und vorzugsweise auch als die zweite Fördervorrichtung. Zudem geht das mindestens eine Mitnehmerelement beim Kontakt von dessen Kontaktfläche mit dem Teigstück eine formschlüssige Verbindung ein, da die Kontaktfläche in das Teigstück leicht eingedrückt wird.

Da das mindestens eine Mitnehmerelement radial frei relativ zur Welle bewegbar ist, wird die durch Auflage der Kontaktfläche des mindestens einen Mitnehmerelements auf dem Teigstück entstehende Höhendifferenz automatisch kompensiert.

Das mindestens eine Mitnehmerelement und/oder die Welle weist vorzugsweise ein Halteelement auf, welches ein Abfallen des mindestens einen Mitnehmerelements von der Welle verhindert. Das heisst, das Halteelement beschränkt die Bewegung des mindestens einen Mitnehmerelements von der Welle weg, so dass dieses sich nicht von der Welle lösen kann.

Das mindestens eine Mitnehmerelement kann mit seiner Auflagefläche gleichzeitig auch auf mehr als einem Teigstück aufliegen, beispielsweise auf zwei oder mehr Teigstücke, die nebeneinander in einer Linie auf der ersten Fördervorrichtung aufliegen, um diese gleichzeitig über die erste Fördervorrichtung zu schieben.

In der vorliegenden Anmeldung wird unter Linie eine Anordnung von zwei oder mehr Teigstücken quer zur Förderrichtung nebeneinander bezeichnet. Eine Reihe bezeichnet in der vorliegenden Anmeldung die in mehreren Linien in Förderrichtung hintereinander liegenden Teigstücke.

Die Welle verfügt vorzugsweise über zwei oder mehr Mitnehmerelemente, welche in einem radialen Abstand von 360°/n, wobei n die Anzahl der Mitnehmerelemente an der Welle darstellt, relativ zueinander auf der Welle angeordnet sind. Dadurch kann bei jeder Drehung der Welle um den Winkel 360°/n ein Teigstück oder eine Linie mehrerer nebeneinanderliegender Teigstücke von der ersten Fördervorrichtung auf die zweite Fördervorrichtung geschoben werden.

Vorzugsweise ist das mindestens eine Mitnehmerelement mittels mindestens einer Gleitlagerung an der Welle gelagert. Dies erlaubt eine möglichst einfache Ausgestaltung der Lagerung. Eine derartige Gleitlagerung kann beispielsweise mittels wenigstens einer Nut in der Welle umgesetzt werden, in welcher das mindestens eine Mitnehmerelement verschiebbar gelagert ist. Die Nut und/oder das mindestens eine darin aufgenommene Mitnehmerelement weisen hierbei vorzugsweise eine Gleitbeschichtung auf.

Alternativ kann das mindestens eine Mitnehmerelement auch mittels einer anderen Lagerung, beispielsweise eine Wälzlagerung, radial verschiebbar an der Welle gelagert sein.

Sofern an der Welle zwei oder mehr Mitnehmerelemente angeordnet sind, weist die Welle vorzugsweise eine gerade Anzahl an Mitnehmerelementen auf, wobei jeweils einander in einem radialen Abstand von 180° relativ zueinander an der Welle angeordnete Mitnehmerelemente über mindestens zwei Verbindungsstege miteinander verbunden sind, die sich im Bereich der Enden der jeweiligen Mitnehmerelemente befinden, wobei jeder der Verbindungsstege in einer Gleitführung der Welle aufgenommen ist.

In dieser Ausführungsform sind jeweils einander gegenüberliegend an der Welle angeordnete Mitnehmerelement mittels mindestens zwei Verbindungsstege mechanisch verbunden. Durch diese Verbindung wirkt die Gewichtskraft der beiden Mitnehmerelemente auf die auf einem Teigstück aufliegende Kontaktfläche einer der beiden Mitnehmerelemente, so dass die Haftreibung zwischen der Kontaktfläche des einen Mitnehmerelements, welche auf einem Teigstück aufliegt, grösser ist als bei einer Ausführungsform, welche nur über ein Mitnehmerelement verfügt oder bei der zwei oder mehr Mitnehmerelemente nicht miteinander verbunden sind.

Vorzugsweise verfügt die Vorrichtung über eine Steuerung, welche den Antrieb der Welle derart steuert, dass die Welle in vordefinierten Zeitabständen eine Drehbewegung um ihre Längsachse um einen Winkel von 360°/n vollführt, wobei n die Anzahl der an der Welle angeordneten Mitnehmerelemente darstellt.

Das heisst, dass eine Welle mit einem Mitnehmerelement diese in den vordefinierten Zeitabständen eine Drehung um 360° vollführt. Eine Welle mit zwei Mitnehmerelementen wird in den vordefinierten Zeitabständen jeweils eine Drehung um 180° vollführen.

Vorzugsweise verfügt die Steuerung über Eingabemittel, mit denen die vordefinierten Zeitabstände eingestellt oder verändert werden können. Die Steuerung ist vorzugsweise zusätzlich mit einem Antrieb der ersten Fördervorrichtung und/oder der zweiten Fördervorrichtung verbunden. Dadurch kann mittels der Steuerung vorzugsweise die erste Geschwindigkeit und/oder die zweite Geschwindigkeit eingestellt oder verändert werden, beispielsweise über die Eingabemittel.

Die vordefinierten Zeitabstände sind vorzugsweise gleich gross, das heisst, dass die Welle periodisch eine Drehbewegung um den Winkel 360°/n vollführt. Die vordefinierten Zeitabstände sind vorzugsweise auf die Grösse der auf der ersten Fördervorrichtung aufliegenden Teigstücke sowie auf die erste und zweite Geschwindigkeit abgestimmt, so dass pro Drehbewegung um den Winkel 360°/n ein Teigstück oder eine Linie von quer zur Förderrichtung nebeneinander liegender Teigstücke mittels der Kontaktfläche des mindestens einen Mitnehmerelements von der ersten Fördervorrichtung auf die zweite Fördervorrichtung geschoben werden kann. Die Steuerung kann hierzu vorzugsweise derart ausgestaltet sein, dass diese die vordefinierten Zeitabstände anhand der ersten und dritten Geschwindigkeit sowie der Grösse der auf der ersten Fördervorrichtung aufliegenden Teigstücke berechnet.

Vorzugsweise ist die Steuerung derart ausgestaltet, dass in einer Ruheposition, in welcher die Welle stillsteht, das mindestens eine Mitnehmerelement derart ausgerichtet ist, dass dessen Kontaktfläche nicht mit einem auf der ersten Fördervorrichtung oder der zweiten Fördervorrichtung aufliegendes Teigstück in Berührung kommt. Bei einer Welle mit einem Mitnehmerelement oder mit zwei Mitnehmerelementen steht das Mitnehmerelement bzw. stehen die beiden Mitnehmerelemente vorzugsweise im Wesentlichen parallel zur ersten und zweiten Fördervorrichtung.

Die vordefinierten Zeitabstände können vorzugsweise anhand von Daten eines Sensors, der mit der Steuerung verbunden ist und der die Position von auf der ersten Fördervorrichtung aufliegenden Teigstücken oder Linien von Teigstücken erfassen kann, bestimmt werden. Dadurch kann eine zuverlässige Funktion der Vorrichtung erzielt werden, da auch in unregelmässigen Abständen in Förderrichtung auf der ersten Fördervorrichtung aufliegende Teigstücke oder Linien von Teigstücken mittels der Kontaktfläche des mindestens einen Mitnehmerelements auf die zweite Fördervorrichtung geschoben werden können.

Vorzugsweise ist die Vorrichtung derart ausgestaltet, dass die Kontaktfläche des mindestens einen Mitnehmerelements an einer vordefinierten Position auf einem auf der ersten Fördervorrichtung aufliegenden Teigstück zur Auflage kommt.

Die vordefinierte Position ist vorzugsweise die Mitte eines auf der ersten Fördervorrichtung aufliegenden Teigstücks. Alternativ kann die vordefinierte Position jedoch auch im in Förderrichtung ersten Drittel eines auf der Fördervorrichtung aufliegendem Teigstücks liegen. Mehrere in einer Linie nebeneinander auf der ersten Fördervorrichtung aufliegende Teigstücke sind in der Regel im Wesentlichen gleich ausgerichtet, das heisst, deren in Förderrichtung gesehen vordere und hintere Kanten liegen im Wesentlichen auf derselben gedachten Linie. Dadurch wird bei der erwähnten Ausführungsform die Kontaktfläche des mindestens einen Mitnehmerelements bei allen in der Linie liegenden Teigstücke im Wesentlichen an derselben Position aufliegen.

Die Steuerung ist ferner vorzugsweise derart ausgestaltet, dass diese die vordefinierten Zeitabstände anhand der ersten Geschwindigkeit, der dritten Geschwindigkeit sowie der Grösse der Teigstücke derart berechnet, dass die Kontaktfläche des mindestens einen Mitnehmerelements an der vordefinierten Position zur Auflage kommt. Um diese Berechnung zu ermöglichen, verfügt die Steuerung zudem über Mittel, mit denen zumindest die Position eines ersten auf der ersten Fördervorrichtung aufliegendes Teigstücks oder einer ersten Linie auf der ersten Fördervorrichtung aufliegenden Teigstücke erfasst werden kann. Dies kann entweder durch eine manuelle Eingabe durch einen Benutzer, über mindestens einen Sensor oder über eine Datenkommunikation mit einer in Förderrichtung vor der Welle angeordneten Teigbearbeitungseinheit, beispielswiese einer Stanz- oder Schneideinheit umgesetzt werden.

Vorzugsweise verfügt die Vorrichtung über Einstellmittel, mit denen der erste Abstand verändert werden kann. Dadurch kann der erste Abstand einfach an die Dicke der zu verschiebenden Teigstücke angepasst werden, beispielsweise wenn mit der Vorrichtung nacheinander Teigstücke aus unterschiedlichen Teigen bzw. aus Teigen mit unterschiedlicher Dicke separiert werden sollen. Die Einstellmittel können eine manuelle oder motorische Veränderung des ersten Abstandes ermöglichen. Die Einstellmittel können demnach beispielsweise mindestens eine Stellschraube, mindestens eine Spindel und/oder mindestens einen Stellantrieb, wie zum Beispiel einen Pneumatik- oder Hydraulikkolben oder einen Elektromotor umfassen.

Vorzugsweise ist die Welle über eine lösbare Verbindung, insbesondere über eine lösbare Kupplung, mit dem Antrieb verbunden. Dies ermöglicht eine einfache Reinigung der Welle sowie des mindestens einen Mitnehmerelements, da die Welle hierzu von der Vorrichtung gelöst und an einen Reinigungsplatz verbracht werden kann. Auch ermöglicht dies einen einfachen Austausch der Welle, beispielsweise bei einer Beschädigung derselben oder wenn eine Welle mit mindestens einem Mitnehmerelement mit einer grösseren oder kleineren Dimension verwendet werden soll.

Vorzugsweise ist an der Welle ein Einstellelement angeordnet, mit welchem die radiale Bewegung des mindestens einen Mitnehmerelements in radialer Richtung von der Oberfläche der Welle weg auf mindestens zwei vorbestimmte Werte beschränkt werden kann.

Dies ermöglicht eine Einstellung der radialen Bewegung des mindestens einen Mitnehmerelements je nach Dicke der zu schiebenden Teigstücke, was zu einer grösseren Flexibilität in Bezug auf den Einsatz der Vorrichtung führt.

Das Einstellelement ist vorzugsweise in axialer Richtung linear verschiebbar auf der Welle angeordnet und verfügt über mindestens zwei Anschlagflächen, die in unterschiedlichen Abständen zur Oberfläche der Welle angeordnet sind und auf denen ein am mindestens einen Mitnehmerelement angeordneter Anschlagbereich, der der Kontaktfläche gegenüberliegt, in Anschlag gebracht werden kann.

Durch eine Verschiebung des Einstellelements in axialer Richtung der Welle kann die für die zu verschiebenden Teigstücke geeignete Anschlagfläche gewählt werden, die mit dem Anschlagbereich zusammenwirken soll.

Die vorliegende Anmeldung betrifft ferner ein Verfahren zum Separieren von Teigstücken. In einem ersten Schritt wird mindestens ein Teigstück auf einer ersten Fördervorrichtung in einer Förderrichtung mit einer ersten Geschwindigkeit gefördert. In einem nächsten Schritt wird eine Welle, die in einem ersten Abstand oberhalb eines Übergangsbereichs zwischen der ersten Fördervorrichtung und einer in Förderrichtung an dieser anschliessenden zweiten Fördervorrichtung angeordnet ist, mittels eines Antriebes mit einer dritten Geschwindigkeit, die höher ist als die erste Geschwindigkeit, in Drehung versetzt. An der Welle ist mindestens ein radial von dieser abstehendes Mitnehmerelement angeordnet, welches an einem freien Ende, das von einer Oberfläche der Welle beabstandet ist, über eine Kontaktfläche verfügt und welches in radialer Richtung relativ zur Welle und an dieser frei verschiebbar gelagert ist. Die zweite Fördervorrichtung wird in der Förderrichtung mit einer zweiten Geschwindigkeit, die höher ist als die erste Geschwindigkeit, angetrieben. In einem weiteren Schritt wird mindestens ein Teigstück durch das mindestens eine Mitnehmerelement durch Auflage von dessen Kontaktfläche auf diesem erfasst. Anschliessend wird das mindestens eine Teigstück durch die auf diesem aufliegende Kontaktfläche mit dem mindestens einen Mitnehmerelement bei der Drehbewegung der Welle geschoben, so dass das mindestens eine Teigstück von der ersten Fördervorrichtung mit der dritten Geschwindigkeit auf die zweite Fördervorrichtung geschoben wird.

Durch die Verschiebung der Teigstücke auf die zweite Fördervorrichtung, welche mit einer höheren Geschwindigkeit angetrieben wird als die erste Fördervorrichtung durch das mindestens eine Mitnehmerelement können die Abstände in Förderrichtung hintereinanderliegender Teigstücke erhöht werden, das heisst, die Teigstücke können hierdurch zuverlässig separiert werden.

Das oben beschriebene Verfahren wird insbesondere bevorzugt mit einer erfindungsgemässen Vorrichtung gemäss der vorstehenden Beschreibung durchgeführt. Demgemäss kann das Verfahren vorzugsweise mit einer Vorrichtung verwendet werden, welche mindestens eines oder eine Kombination von zwei oder mehr der beschriebenen, bevorzugten Merkmale gemäss der obenstehenden Beschreibung umfasst.

Die dritte Geschwindigkeit ist vorzugsweise gleich gross wie die zweite Geschwindigkeit. Alternativ kann die dritte Geschwindigkeit jedoch auch höher oder tiefer sein als die dritte Geschwindigkeit.Die dritte Geschwindigkeit ist jedoch stets höher als die erste Geschwindigkeit.

Die vorliegende Anmeldung betrifft ferner ein System zur Herstellung von Teigstücken, umfassend mindestens eine Einheit zum Stanzen oder Schneiden von Teigstücken aus einem Teig sowie eine Vorrichtung zum Separieren von Teigstücken gemäss der obenstehenden Beschreibung, welche in Förderrichtung nach der Einheit zum Stanzen oder Schneiden von Teigstücken aus einem Teig angeordnet ist.

Die Einheit zum Stanzen oder Schneiden von Teigstücken aus einem Teig liegt vorzugsweise in der Form einer Schneidwalze, einer Stanzeinheit mit mindestens einer Stanzform, eines Fallmessers oder dergleichen vor.

Das System kann ferner auch wenigstens eine weitere Einheit umfassen, welche entweder in Förderrichtung vor oder nach der Vorrichtung zum Separieren von Teigstücken angeordnet ist. Als weitere Einheit kann beispielsweise eine Dreheinheit zum Drehen einzelner Linien von Teigstücken, eine Fülleinheit zum Applizieren einer Füllung auf die Teigstücke, eine Längsschneideinheit zum Schneiden mindestens eines Teigs in Teigstreifen oder eine Einheit zum Aufwickelnd der Teigstücke im System umfasst sein.

Vorzugsweise ist die Einheit zum Stanzen oder Schneiden von Teigstücken aus einem Teig derart konfiguriert, dass der mindestens eine Teig in im Wesentlichen dreieckige Teigstücke gestanzt oder geschnitten wird.

Dadurch kann mit dem System, insbesondere bei einer in Förderrichtung nach der Vorrichtung zum Separieren von Teigstücken angeordneten Aufwickeleinheit mittels des Systems Croissants hergestellt werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Seitenansicht einer Ausführungsform einer erfindungsgemässen Vorrichtung zum Separieren von Teigstücken;
- Fig. 2: die schematische Seitenansicht gemäss Fig. 1 in einem Schritt des erfindungsgemässen Verfahrens;
- Fig. 3: die schematische Seitenansicht gemäss Fig. 1 und 2 in einem weiteren Schritt des erfindungsgemässen Verfahrens;
- Fig. 4: eine perspektivische Ansicht einer Ausführungsform einer Welle einer erfindungsgemässen Vorrichtung zum Separieren von Teigstücken;
- Fig. 5: eine perspektivische Ansicht der Welle gemäss der Figur 4, wobei die Welle mit dem Antrieb über die Kupplung verbunden ist;
- Fig. 6: eine perspektivische Ansicht einer Ausführungsform eines erfindungsgemässen Systems für die Herstellung von Teigstücken;
- Fig. 7: eine Detailaufnahme der erfindungsgemässen Vorrichtung zum Separieren von Teigstücken in der Ausführungsform des Systems zur Herstellung von Teigstücken gemäss der Fig. 6.

Grundsätzlich sind in den Figuren gleiche Teile mit gleichen Bezugszeichen versehen.

### Wege zur Ausführung der Erfindung

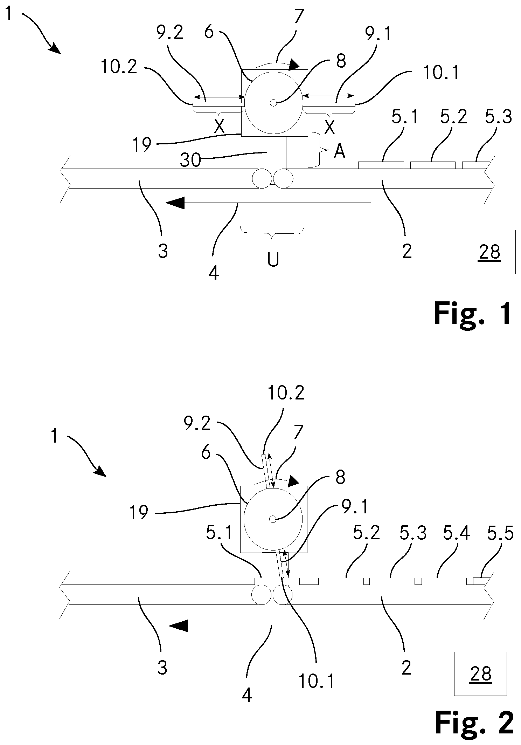

Die Fig. 1 zeigt eine schematische Seitenansicht einer Ausführungsform einer erfindungsgemässen Vorrichtung 1 zum Separieren von Teigstücken 5.1 - 5.3. Die Vorrichtung 1 umfasst eine erste Fördervorrichtung 2, welche bei der gezeigten Ausführungsform als Bandförderer ausgestaltet ist. Auf der ersten Fördervorrichtung 2 können Teigstücke 5.1 - 5.3 aufliegen, welche durch die erste Fördervorrichtung 2 mit einer ersten Geschwindigkeit in einer Förderrichtung 4 gefördert werden. Die Vorrichtung 1 umfasst ferner eine zweite Fördervorrichtung 3, welche bei der gezeigten Ausführungsform ebenfalls als Bandförderer ausgestaltet ist. Die zweite Fördervorrichtung 3 ist in Förderrichtung 4 hinter der ersten Fördervorrichtung 2 angeordnet, wobei die beiden Fördervorrichtungen 2, 3 im Wesentlichen auf derselben Höhe angeordnet sind. Die zueinander hin gerichteten Enden der beiden Fördervorrichtungen 2, 3 liegen in einem Übergangsbereich U dicht aneinander, so dass die auf der ersten Fördervorrichtung 2 geförderten Teigstücke 5.1 - 5.3 von der ersten Fördervorrichtung 2 auf die zweite Fördervorrichtung 3 übergeben werden können. Mittels der zweiten Fördervorrichtung 3 lassen sich die Teigstücke 5.1 - 5.3 in der Förderrichtung 4 mit einer zweiten Geschwindigkeit, die höher ist als die erste Geschwindigkeit, fördern.

Die Vorrichtung weist eine Welle 6 auf, die in einem ersten Abstand A oberhalb der beiden Fördervorrichtungen 2, 3 im Übergangsbereich U angeordnet ist. Die Welle 6 erstreckt sich quer zur Förderrichtung 4 über eine gesamte Breite der beiden Fördervorrichtungen 2, 3 und weist eine Längsachse 8 auf. Der erste Abstand A kann über Einstellmittel 30 verändert werden, so dass je nach Dicke der Teigstücke 5.1 - 5.3 ein geeigneter erster Abstand A eingestellt werden kann.

Die Welle 6 wird über einen Antrieb 19 um ihre Längsachse 8 in Drehbewegung 7 versetzt. Die Drehbewegung 7 erfolgt mit einer dritten Geschwindigkeit, welche höher ist als die erste Geschwindigkeit und vorzugsweise gleich ist wie die zweite Geschwindigkeit. Die Richtung der Drehbewegung 7 ist derart, dass der Teil der Welle 6, welche zu den Fördervorrichtungen 2, 3 weist, sich in der Förderrichtung 4 bewegt. An der Welle 6 sind bei der gezeigten Ausführungsform zwei radial von dieser abstehende Mitnehmerelemente 9.1, 9.2 angeordnet. Bei alternativen Ausführungsformen kann an der Welle 6 jedoch auch eine andere Anzahl an Mitnehmerelementen 9.1, 9.2 angeordnet sein, beispielsweise nur eines oder drei. Die Mitnehmerelemente 9.1, 9.2 verfügen an einem freien Ende, das von der Welle 6 beabstandet ist, das heisst von dieser weggerichtet ist, über jeweils eine Kontaktfläche 10.1, 10.2. Die Mitnehmerelemente 9.1, 9.2 sind in radialer Richtung relativ zur Welle 6 frei verschiebbar an dieser gelagert (durch Doppelpfeil angedeutet). Das heisst, dass sich die Mitnehmerelemente 9.1, 9.2 ohne Einwirkung irgendeiner Kraft - mit Ausnahme der Schwerkraft - in radialer Richtung relativ zur Welle 6 verschieben lassen. Da die Welle 6 durch den Antrieb 19 in die Drehbewegung 7 versetzt wird, bewegen sich die Mitnehmerelemente 9.1, 9.2 sowie ihre Kontaktflächen 10.1, 10.2 je nach der Winkelposition der Mitnehmerelemente 9.1, 9.2 um die Längsachse 8 der Welle 6 zur der Welle 6 hin oder von dieser weg. Diese Bewegung wird durch die Schwerkraft sowie das Eigengewicht der Mitnehmerelemente 9.1,9.2 verursacht.

Die Mitnehmerelemente 9.1, 9.2 weisen eine Dimension X auf, welche derart ist, dass deren jeweilige Kontaktfläche 10.1, 10.2 auf mindestens ein auf der ersten Fördervorrichtung 2 aufliegendes Teigstück 5.1 - 5.3 in Auflage gebracht werden können. Die jeweilige Kontaktfläche 10.1, 10.2 kommt bei einer entsprechenden Winkelposition des zugehörigen Mitnehmerelements 9.1, 9.2 um die Längsachse 8 der Welle 6 auf dem mindestens einen Teigstück 5.1 - 5.3 in Auflage und somit in Kontakt.

Die Vorrichtung 1 verfügt ferner über eine Steuerung 28, welche den Antrieb 19 der Welle 6 sowie Förderantriebe (nicht gezeigt) der beiden Fördervorrichtungen 2, 3 steuert. Mittels der Vorrichtung 1 lassen sich nebst einem Teigstück 5 selbstverständlich auch Linien von quer zur Förderrichtung nebeneinanderliegender Teigstücke 5.1 - 5.3 verschieben. Hierbei können zwei, drei, vier, fünf oder sechs Teigstücke in einer Linie nebeneinanderliegen, das heisst die Teigstücke können zwei-, drei-, vier-, fünf- oder sechsreihig nebeneinander in einer Linie liegen. Je nach Grösse der Teigstücke 5.1 - 5.3 sowie der Breite der Fördervorrichtungen 2. 3 quer zur Förderrichtung 4 können jedoch auch mehr als sechs Teigstücke 5.1 - 5.3 in einer Linie nebeneinanderliegen.

Wie auf der Fig. 2 dargestellt ist, wird durch den Kontakt zwischen einer Kontaktfläche 10.1, 10.2 und einem Teigstück 5.1 - 5.5, hier beispielsweise zwischen der Kontaktfläche 10.1 eines ersten Mitnehmerelements 9.1 auf einem ersten Teigstück 5.1, dem Eigengewicht des entsprechenden ersten Mitnehmerelements 9.1 sowie der relativ zur ersten Geschwindigkeit der ersten Fördervorrichtung 2 höheren dritten Geschwindigkeit der Drehbewegung 7 der Welle 6 das erste Teigstück 5.1, auf welchem die Kontaktfläche 10.1 des ersten Mitnehmerelements 9.1 aufliegt, über die erste Fördervorrichtung 2 und auf die zweite Fördervorrichtung 3 geschoben. Vorzugsweise entspricht die dritte Geschwindigkeit der Drehbewegung 7 der Welle 6 der zweiten Geschwindigkeit der zweiten Fördervorrichtung 3. Dadurch, dass das Mitnehmerelement 9.1 in radialer Richtung frei verschiebbar an der Welle 6 gelagert ist, kann die Dicke bzw. Höhe der Teigstücke 5.1 - 5.5 bei der Bewegung eines Mitnehmerelements 9.1, 9.2 zwischen der Welle 6 und den Fördervorrichtungen 2, 3 hindurch kompensiert werden. Dadurch wird auch verhindert, dass sich ein Teigstück 5.1 - 5.5 durch Auflage einer der Kontaktflächen 10.1, 10.2 deformiert bzw. sich darauf eine Druckstelle bildet, wie dies beispielsweise bei einem Mitnehmerelement mit einer Kraftbeaufschlagung der Fall wäre.

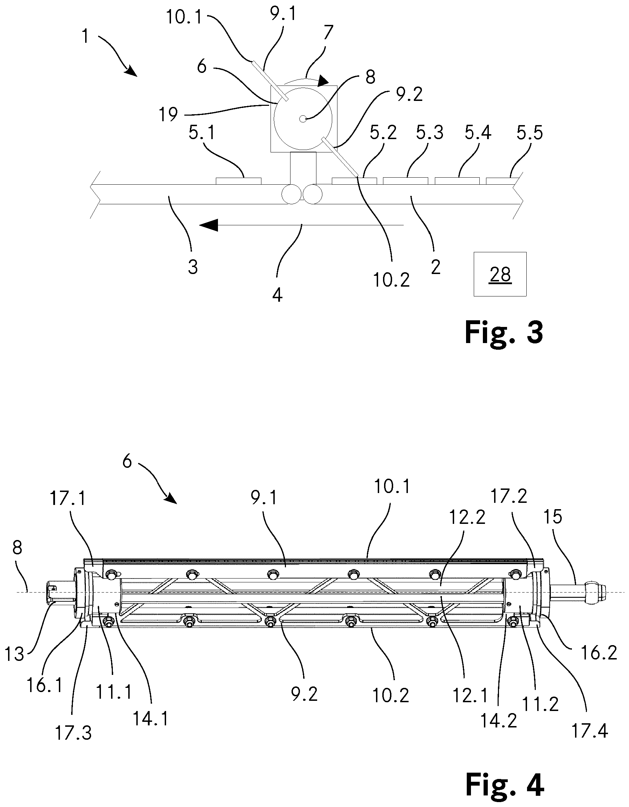

Die Fig. 3 zeigt die Situation nachdem die Welle 6 weitergedreht wurde: Das erste Teigstück 5.1 wurde durch die Kontaktfläche 10.1 des ersten Mitnehmerelements 9.1 auf die zweite Fördervorrichtung 3 geschoben. Durch eine erneute oder der andauernden Drehbewegung 7 der Welle 6 kommt die Kontaktfläche 10.2 des zweiten Mitnehmerelements 9.2 auf einem zweiten Teigstück 5.2 zur Auflage. Dieses wird in der Folge wie das erste Teigstück 5.1 durch den Kontakt der Kontaktfläche 10.2 des zweiten Mitnehmerelements 9.2 von der ersten Fördervorrichtung 2 auf die zweite Fördervorrichtung 3 geschoben. Wie auf der Fig. 3 gut erkennbar ist, kann mittels der erfindungsgemässen Vorrichtung 1 bzw. durch das erfindungsgemässe Verfahren der Abstand einzelner Teigstücke 5.1 - 5.5 in der Förderrichtung 4 vergrössert werden, das heisst es ergibt sich eine Separierung der Teigstücke 5.1 - 5.5 in der Förderrichtung 4.

Die Fig. 4 zeigt eine perspektivische Ansicht einer Ausführungsform einer Welle 6 einer erfindungsgemässen Vorrichtung 1. Die Welle 6 gemäss der gezeigten Ausführungsform verfügt über zwei Vollwellenteile 11.1, 11.2, welche durch zwei Längsstäbe 12.1, 12.2, die parallel zur Längsachse 8 der Welle 6 angeordnet sind, verbunden sind. An einem ersten Vollwellenteil ist eine Kupplung 13 befestigt, mit welcher sich die Welle 6 mit dem Antrieb 19 lösbar verbinden lässt. Am zweiten Vollwellenteil 11.2 ist ein Achsstummel 15 befestigt, mit dem die Welle 6 drehbar an der Vorrichtung 1 gelagert werden kann. An der Welle 6 sind zwei einander um 180° um die Längsachse 8 gegenüberliegende Mitnehmerelemente 9.1, 9.2 angeordnet. Die beiden Mitnehmerelemente 9.1, 9.2 sind an ihren Enden über zwei Verbindungsstege 14.1, 14.2 miteinander verbunden. Die Verbindungsstege 14.1, 14.2 sind jeweils in einer Nut 14.1, 14.2 der Vollwellenteile 11.1, 11.2 linear beweglich gelagert, wodurch die Mitnehmerelemente 9.1, 9.2 gemeinsam in radialer Richtung frei relativ zu den zwei Vollwellenteilen 11.1, 11.2 bewegbar sind. Jedes der Mitnehmerelemente 9.1, 9.2 verfügt über eine Kontaktfläche 10.1,10.2 mit welcher das jeweilige Mitnehmerelement 9.1, 9.2 auf mindestens einem Teigstück aufliegen kann. Zusätzlich zu den beiden Verbindungsstegen sind die beiden Mitnehmerelemente 9.1, 9.2 über eine Mehrzahl von Querstreben miteinander verbunden.

An den zwei Vollwellenteilen 11.1, 11.2 ist jeweils ein Einstellelement 16.1, 16.2 angeordnet, welches relativ zum jeweiligen Vollwellenteil 11.1, 11.2 axial linear entlang der Längsachse 8 bewegbar ist. Die Einstellelemente 16.1, 16.2 weisen mehrere Anschlagsflächen auf, die bei der gezeigten Ausführungsform als Anschlagringe ausgeführt sind, und welche unterschiedliche Höhen relativ zu einer Oberfläche der zwei Vollwellenteile 11.1, 11.2 aufweisen. Die Anschlagflächen wirken mit jeweils zwei Anschlagbereichen 17.1 - 17.4 pro Mitnehmerelement 9.1, 9.2 zusammen, um die Bewegung der Kontaktflächen 10.1, 10.2 von der Welle 6 weg zu beschränken. Die Anschlagbereiche 17.1 - 17.4 befinden sich jeweils an den Enden der Mitnehmerelemente 9.1, 9.2. Durch die axiale Verschiebung der Einstellelemente 16.1, 16.2 relativ zum jeweiligen Vollwellenteil 11.1, 11.2 kann eine unterschiedliche Anschlagfläche mit den Anschlagbereichen 17.1 - 17.4 zusammenwirken. Hierbei ist anzumerken, dass jeweils die Anschlagbereiche 17.1 - 17.4, die am jeweils anderen Mitnehmerelement 9.1, 9.2 angeordnet sind, die radiale Bewegung eines Mitnehmerelements 9.1, 9.2 von der Welle 6 weg beschränken. Das heisst, dass die Anschlagbereiche 17.3, 17.4 des zweiten Mitnehmerelements 9.2 durch Zusammenwirken mit den Anschlagflächen der beiden Einstellelemente 16.1, 16.2 die radiale Bewegung des ersten Mitnehmerelements 9.1 beschränken und umgekehrt.

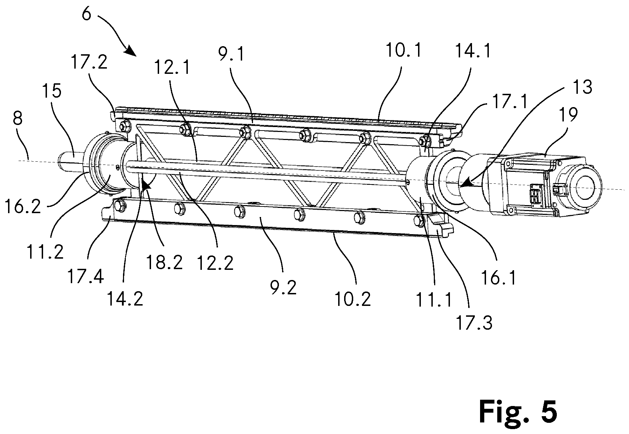

Die Fig. 5 ist eine perspektivische Ansicht der Welle 6 gemäss der Figur 4, wobei die Welle 6 mit dem Antrieb 19 über die Kupplung 13 verbunden ist. Auf der Fig. 5 gut sichtbar ist die Führung des Verbindungsstegs 14.2 in der Nut 18.2 des zweiten Vollwellenteils 11.2. Aus perspektivischen Gründen ist die Führung des Verbindungssteges 14.1 in der Nut 18.1 des ersten Vollwellenteils 11.1 auf der Figur nicht sichtbar, da diese durch das erste Vollwellenteil 11.1 verdeckt ist. Diese Führung im ersten Vollwellenteil 11.1 ist jedoch gleich ausgeführt wie beim zweiten Vollwellenteil 11.2.

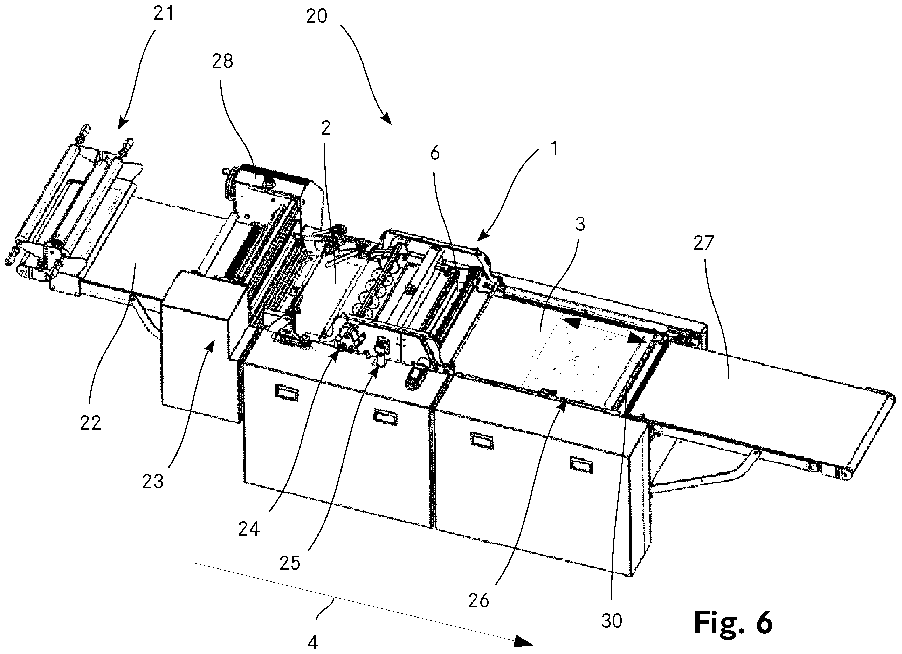

Die Fig. 6 zeigt eine perspektivische Ansicht einer Ausführungsform eines Systems 20 für die Herstellung von Teigstücken. Das System 20 umfasst eine Vorrichtung 1 zum Separieren von Teigstücken, z.B. gemäss den Figuren 1 - 3. Zusätzlich zu dieser Vorrichtung 1 umfasst das System 20 weitere Einheiten 21, 23, 24, 25, die in Förderrichtung 4 vor der Vorrichtung 1 sowie eine weitere Einheit 26, die in Förderrichtung 4 nach der Vorrichtung 1 angeordnet sind.

In Förderrichtung 4 ganz zuvorderst weist das System 20 eine Teigbandpositioniereinheit 21 auf, mit welcher ein Teig in einer definierten Position quer zur Förderrichtung 4 auf einer dritten Fördervorrichtung 22, die in Förderrichtung 4 vor der ersten Fördervorrichtung 2 angeordnet ist, aufgelegt werden kann. Mittels der dritten Fördervorrichtung 22 kann der Teig zu einer Kalibriereinheit 23 gefördert werden. Mit der Kalibriereinheit wird der Teig auf eine vordefinierte Dicke gebracht. In Förderrichtung 4 nach der Kalibriereinheit 23 befindet sich die erste Fördervorrichtung 2. Mit der ersten Fördervorrichtung 2 wird der Teig von der Kalibriereinheit 23 zur Vorrichtung 1 zum Separieren von Teigstücken hin gefördert. In der Förderrichtung 4 vor dieser Vorrichtung 1 sind ferner eine Längsschneideinheit 24, mit welcher der Teig in mehrere quer zur Förderrichtung 4 nebeneinanderliegende Teigbänder geschnitten wird, sowie eine Stanzeinheit 25 angeordnet, wobei mit letzterer aus den Teigbändern Teigstücke mit einer definierten Form gestanzt werden. Diese Teigstücke werden durch die Vorrichtung 1 separiert und auf die in der Förderrichtung 4 stromabwärts liegenden zweiten Fördervorrichtung 3 geschoben. Die zweite Fördervorrichtung 3 verfügt über ein linear entlang der Förderrichtung 4 verschiebbares Ende 30 (durch Doppelpfeil angedeutet). Durch eine Bewegung dieses verschiebbaren Endes 30 der zweiten Fördervorrichtung 3 entgegen der Förderrichtung 4 kann mindestens ein Teigstück oder eine Linie von quer zur Förderrichtung 4 nebeneinander auf der zweiten Fördervorrichtung 3 aufliegende Teigstücke auf eine Dreheinheit überführt werden, mit welcher dieses mindestens eine Teigstück oder diese mindestens eine Linie von Teigstücken um einen definierten Winkel, insbesondere um 180° gedreht werden. Dies ermöglich beispielsweise beim Stanzen von dreieckigen Teigstücken, bei welchem jede zweite Linie an Teigstücken eine um 180° entgegengesetzte Ausrichtung aufweist, das Ausrichten aller Linien an Teigstücken in dieselbe Richtung. Anschliessend gelangen die Teigstücke auf eine vierte Fördervorrichtung 27. Mit der vierten Fördervorrichtung 27 können die Teigstücke zu weiteren Einheiten (nicht gezeigt), z.B. zum Aufwickeln der Teigstücke gefördert werden. Alternativ können am Ende der vierten Fördervorrichtung 27 die Teigstücke von einem Bediener des Systems 20 auf Backbleche transferiert werden.

Bei der gezeigten Ausführungsform verfügt das System 20 über eine Steuerung 28, die an der Kalibriereinheit 23 angeordnet ist. Mit der Steuerung 28 können sämtliche Einheiten 21 - 25, 26 sowie die Vorrichtung 1 zum Separieren von Teigstücken zentral gesteuert werden. Ferner steuert die Steuerung 28 auch alle Fördervorrichtungen 1, 2, 22, 27 des Systems 20.

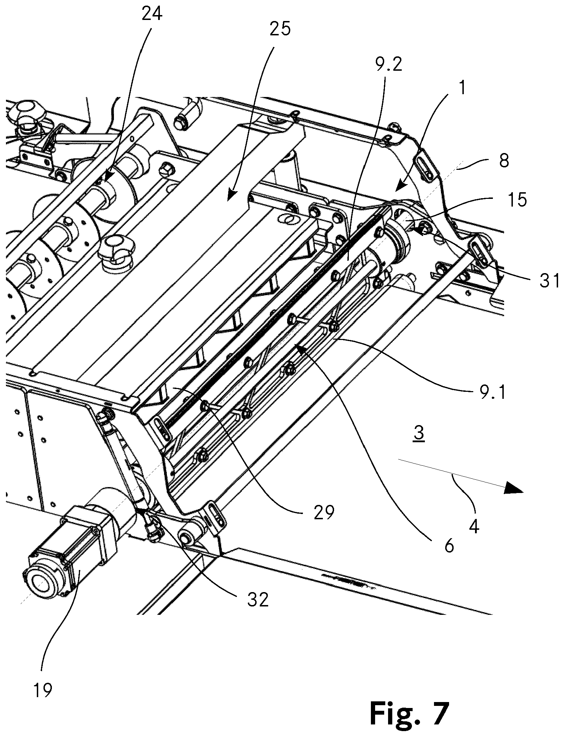

Die Fig. 7 ist eine Detailaufnahme der Vorrichtung 1 zum Separieren von Teigstücken gemäss der Ausführungsform des Systems 20 zur Herstellung von Teigstücken der Fig. 6.

Auf dieser Figur ist gut erkennbar, dass sich die Welle 6, welche der Ausführungsform gemäss der Fig. 4 und Fig. 5 entspricht, über die gesamte Breite der zweiten Fördervorrichtung 2 und der dritten Fördervorrichtung 3 erstreckt. Der Achsstummel 15 sowie die Kupplung 13 sind in entsprechende Aufnahmen 31, 32 eines Gehäuses des Systems 1 aufgenommen, wobei der Achsstummel 15 in der ersten Aufnahme 31 drehbar gelagert ist, während die Kupplung 13 mit dem am Gehäuse befestigen Antrieb 19 lösbar verbunden ist. Wie erkennbar ist, liegt die Längsachse 8 der Welle 6 rechtwinklig zur Förderrichtung 4. In dieser Detailaufnahme ist ferner ersichtlich, dass die Stanzeinheit 25 über eine Stanzplatte 29 verfügt, welche mittels Aktoren (nicht gezeigt) in vertikaler Richtung bewegt werden kann.

## Patentansprüche

1. Vorrichtung zum Separieren von Teigstücken (5.1, 5.2, 5.3), umfassend eine erste Fördervorrichtung (2) und eine daran anschliessende zweite Fördervorrichtung (3), auf denen darauf aufliegende Teigstücke (5.1, 5.2, 5.3) in einer Förderrichtung (4) gefördert werden können, wobei die erste Fördervorrichtung (2) mit einer ersten Geschwindigkeit und die zweite Fördervorrichtung (3) mit einer zweiten Geschwindigkeit, die grösser ist als die erste Geschwindigkeit, angetrieben werden, sowie eine in einem ersten Abstand oberhalb des Übergangsbereichs der ersten Fördervorrichtung (2) zur zweiten Fördervorrichtung (3) angeordnete Welle (6), welche mittels eines Antriebes (19) in eine Drehbewegung um eine Längsachse (8) mit einer dritten Geschwindigkeit, die grösser ist als die erste Geschwindigkeit, versetzt werden kann und welche sich in einer Richtung quer zur Förderrichtung (4) über eine gesamte Breite der beiden Fördervorrichtungen (2, 3) erstreckt, wobei an der Welle (6) mindestens ein radial von dieser abstehendes Mitnehmerelement (9.1, 9.2) angeordnet ist, welches an einem freien Ende, das von einer Oberfläche der Welle (6) beabstandet ist, über eine Kontaktfläche (10.1, 10.2) verfügt, **dadurch gekennzeichnet, dass** das mindestens eine Mitnehmerelement (9.1, 9.2) in radialer Richtung relativ zur Welle (6) und an dieser frei verschiebbar gelagert ist, so dass sich die Kontaktfläche (10.1, 10.2) des mindestens einen Mitnehmerelements (9.1, 9.2) durch die Drehbewegung der Welle (6) um die Längsachse (8) in Folge der Schwerkraft und des Eigengewichts des mindestens einen Mitnehmerelements (9.1, 9.2) in radialer Richtung zur Welle (6) hin oder von dieser weg bewegt, wobei das mindestens eine Mitnehmerelement (9.1, 9.2) über eine Dimension verfügt, die derart ist, dass die Kontaktfläche (10.1, 10.2) auf mindestens einem auf der ersten Fördervorrichtung (2) aufliegendes Teigstück (5.1, 5.2, 5.3) aufliegen kann, um dieses mit der dritten Geschwindigkeit von der ersten Fördervorrichtung (2) auf die zweite Fördervorrichtung (3) zu schieben.

2. Vorrichtung zum Separieren von Teigstücken (5.1, 5.2, 5.3) gemäss Anspruch 1, **dadurch gekennzeichnet, dass** die Welle (6) über zwei oder mehr Mitnehmerelemente (9.1, 9.2) verfügt, welche je in einem radialen Abstand von 360°/n, wobei n die Anzahl der Mitnehmerelemente (9.1, 9.2) der Welle (6) darstellt, relativ zueinander auf der Welle (6) angeordnet sind.

3. Vorrichtung gemäss einem der Ansprüche 1 oder 2, **dadurch gekennzeichnet, dass** das mindestens eine Mitnehmerelement (9.1, 9.2) mittels mindestens einer Gleitlagerung an der Welle (6) gelagert ist.

4. Vorrichtung gemäss Anspruch 2 und 3, **dadurch gekennzeichnet, dass** die Welle (6) eine gerade Anzahl von Mitnehmerelementen (9.1, 9.2) aufweist, wobei jeweils einander in einem radialen Abstand von 180° relativ zueinander an der Welle (6) angeordnete Mitnehmerelemente (9.1, 9.2) über mindestens zwei Verbindungsstege (14.1, 14.2) miteinander verbunden sind, die sich im Bereich der Enden der jeweiligen Mitnehmerelement (9.1, 9.2) befinden, wobei jeder der Verbindungsstege (14.1, 14.2) in einer Gleitführung der Welle (6) aufgenommen ist.

5. Vorrichtung gemäss einem der Ansprüche 1 bis 4, **dadurch gekennzeichnet, dass** die Vorrichtung (1) über eine Steuerung (28) verfügt, welche den Antrieb (19) der Welle (6) derart steuert, dass die Welle (6) in vordefinierten Zeitabständen eine Drehbewegung um ihre Längsachse (7) um einen Winkel von 360°/n vollführt, wobei n die Anzahl der an der Welle (6) angeordneten Mitnehmerelemente (9.1, 9.2) darstellt.

6. Vorrichtung gemäss Anspruch 5, **dadurch gekennzeichnet, dass** die Vorrichtung (1) derart ausgestaltet ist, dass die Kontaktfläche (10.1, 10.2) des mindestens einen Mitnehmerelements (9.1, 9.2) an einer vordefinierten Position auf einem auf der ersten Fördervorrichtung (2) aufliegenden Teigstück (5.1, 5.2, 5.3) zur Auflage kommt.

7. Vorrichtung gemäss einem der Ansprüche 1 bis 6, **dadurch gekennzeichnet, dass** die Vorrichtung (1) über Einstellmittel verfügt, mit denen der erste Abstand verändert werden kann.

8. Vorrichtung gemäss einem der Ansprüche 1 bis 7, **dadurch gekennzeichnet, dass** die Welle (6) über eine lösbare Verbindung, insbesondere über eine lösbare Kupplung (13), mit dem Antrieb (19) verbunden ist.

9. Vorrichtung gemäss einem der Ansprüche 1 bis 8, **dadurch gekennzeichnet, dass** an der Welle (6) ein Einstellelement (16.1, 16.2) angeordnet ist, mit welchem die radiale Bewegung des mindestens einen Mitnehmerelements (9.1, 9.2) in radialer Richtung von der Oberfläche der Welle (6) weg auf mindestens zwei vorbestimmte Werte beschränkt werden kann.

10. Vorrichtung gemäss Anspruch 9, **dadurch gekennzeichnet, dass** das Einstellelement (16.1, 16.2) in axialer Richtung linear verschiebbar auf der Welle (6) angeordnet ist und über mindestens zwei Anschlagflächen verfügt, die in unterschiedlichen Abständen zur Oberfläche der Welle (6) angeordnet sind und auf denen ein am mindestens einen Mitnehmerelement (9.1, 9.2) angeordneter Anschlagbereich (17), der der Kontaktfläche (10.1, 10.2) gegenüberliegt, in Anschlag gebracht werden kann.

11. Verfahren zum Separieren von Teigstücken (5.1, 5.2, 5.3), insbesondere mit einer Vorrichtung (1) gemäss einem der Ansprüche 1 bis 10, umfassend die Schritte:
a) Fördern mindestens eines Teigstücks (5.1, 5.2, 5.3) auf einer ersten Fördervorrichtung (2) in einer Förderrichtung (4) mit einer ersten Geschwindigkeit;
b) Drehung einer in einem ersten Abstand oberhalb eines Übergangsbereichs zwischen der ersten Fördervorrichtung (2) und einer in Förderrichtung (4) an diese anschliessende zweite Fördervorrichtung (3), welche in der Förderrichtung (4) mit einer zweiten Geschwindigkeit, die höher ist als die erste Geschwindigkeit angetrieben ist, angeordneten Welle (6) mittels eines Antriebes (19) mit einer dritten Geschwindigkeit, die höher ist als die erste Geschwindigkeit, wobei an der Welle (6) mindestens ein radial von dieser abstehendes Mitnehmerelement (9.1, 9.2) angeordnet ist, welches an einem freien Ende, das von einer Oberfläche der Welle (6) beabstandet ist über eine Kontaktfläche (10.1, 10.2) verfügt und welches in radialer Richtung relativ zur Welle (6) und an dieser frei verschiebbar gelagert ist;
c) Erfassen des mindestens einen Teigstücks (5.1, 5.2, 5.3) durch das mindestens eine Mitnehmerelement (9.1, 9.2) durch Auflage von dessen Kontaktfläche (10.1, 10.2) auf dem mindestens einen Teigstück (5.1, 5.2, 5.3);
d) wobei das mindestens eine Teigstück (5.1, 5.2, 5.3) durch die auf diesem aufliegende Kontaktfläche (10.1, 10.2) mit dem mindestens einen Mitnehmerelement (9.1, 9.2) bei der Drehbewegung der Welle (6) mitgezogen wird, so dass das mindestens eine Teigstück (5.1, 5.2, 5.3) von der ersten Fördervorrichtung (2) mit der dritten Geschwindigkeit auf die zweite Fördervorrichtung (3) geschoben wird.

12. System für die Herstellung von Teigstücken (5.1, 5.2, 5.3), umfassend mindestens eine Einheit (25) zum Stanzen oder Schneiden von Teigstücken (5.1, 5.2, 5.3) aus einem Teig sowie eine Vorrichtung (1) zum Separieren von Teigstücken gemäss einem der Ansprüche 1 bis 10, welche in Förderrichtung (4) nach der Einheit (25) zum Stanzen oder Schneiden von Teigstücken (5.1, 5.2, 5.3) aus einem Teig angeordnet ist.

13. System gemäss Anspruch 12, **dadurch gekennzeichnet, dass** die Einheit (25) zum Stanzen oder Schneiden von Teigstücken (5.1, 5.2, 5.3) aus einem Teig derart konfiguriert ist, dass der mindestens eine Teig in im Wesentlichen dreieckige Teigstücke gestanzt oder geschnitten wird.

## Claims

1. Device for separating dough pieces (5.1, 5.2, 5.3), comprising a first conveying device (2) and an adjoining second conveying device (3), on which dough pieces (5.1, 5.2, 5.3) lying thereon can be conveyed in a conveying direction (4), wherein the first conveying device (2) is driven at a first speed and the second conveying device (3) is driven at a second speed which is greater than the first speed, as well as a shaft (6) which is arranged at a first distance above the transition region of the first conveying device (2) to the second conveying device (3) and which can be set into a rotational movement about a longitudinal axis (8) at a third speed which is greater than the first speed by means of a drive (19), the shaft (6) extending in a direction transversely to the conveying direction (4) over an entire width of the two conveying devices (2, 3), wherein at least one driver element (9.1, 9.2) is arranged on the shaft (6) projecting radially therefrom, the at least one driver element (9.1, 9.2) including a contact surface (10.1, 10.2) at a free end thereof which is spaced apart from a surface of the shaft (6), **characterized in that** the at least one driver element (9.1, 9.2) is mounted on the shaft (6) such as to be freely displaceable in the radial direction relative to the shaft (6), such that as a result of the rotational movement of the shaft (6) about the longitudinal axis (8) the contact surface (10.1, 10.2) of the at least one driver element (9.1, 9.2) is moved in the radial direction towards the shaft (6) or away from the latter by the force of gravity and the inherent weight of the at least one driver element (9.1, 9.2), wherein the at least one driver element (9.1, 9.2) has a dimension which is such that the contact surface (10.1, 10.2) may lie on at least one dough piece (5.1, 5.2, 5.3) lying on the first conveying device (2) in order to push the at least one dough piece (5.1, 5.2, 5.3) with the third speed from the first conveying device (2) onto the second conveying device (3).

2. Device for separating dough pieces (5.1, 5.2, 5.3) according to claim 1, **characterized in that** the shaft (6) includes two or more driver elements (9.1, 9.2) which are each arranged on the shaft (6) at a radial distance of 360°/n, wherein n represents the number of driver elements (9.1, 9.2) of the shaft (6).

3. Device according to one of claims 1 or 2, **characterized in that** the at least one driver element (9.1, 9.2) is mounted on the shaft (6) by means of at least one slide bearing.

4. Device according to claims 2 and 3, **characterized in that** the shaft (6) includes an even number of driver elements (9.1, 9.2), wherein driver elements (9.1, 9.2) arranged on the shaft (6) at a radial distance of 180° relative to one another are connected to one another via at least two connecting webs (14.1, 14.2) which are located in the region of the ends of the respective driver element (9.1, 9.2), wherein each of the connecting webs (14.1, 14.2) is received in a sliding guide of the shaft (6).

5. Device according to any one of claims 1 to 4, **characterized in that** the device (1) includes a controller (28) which controls the drive (19) of the shaft (6) such that the shaft (6) performs a rotational movement about its longitudinal axis (7) by an angle of 360°/n at predefined time intervals, wherein n represents the number of driver elements (9.1, 9.2) arranged on the shaft (6).

6. Device according to claim 5, **characterized in that** the device (1) is configured such that the contact surface (10.1, 10.2) of the at least one driver element (9.1, 9.2) comes to rest at a predefined position on a dough piece (5.1, 5.2, 5.3) resting on the first conveying device (2).

7. Device according to any one of claims 1 to 6, **characterized in that** the device (1) includes adjustment means with which the first distance can be altered.

8. Device according to any one of claims 1 to 7, **characterized in that** the shaft (6) is connected to the drive (19) via a releasable connection, in particular via a releasable coupling (13).

9. Device according to any one of claims 1 to 8, **characterized in that** an adjustment element (16.1, 16.2) is arranged on the shaft (6), with which adjustment element (16.1, 16.2) the radial movement of the at least one driver element (9.1, 9.2) in the radial direction away from the surface of the shaft (6) can be limited to at least two predetermined values.

10. Device according to claim 9, **characterized in that** the adjustment element (16.1, 16.2) is arranged on the shaft (6) so as to be linearly displaceable in the axial direction and includes at least two stop surfaces which are arranged at different distances from the surface of the shaft (6) and on which a stop region (17) which is arranged on the at least one driver element (9.1, 9.2) and which is opposite the contact surface (10.1, 10.2) can be brought into abutment.

11. Method for separating dough pieces (5.1, 5.2, 5.3), in particular with a device (1) according to any one of claims 1 to 10, comprising the steps of:
a) conveying at least one dough piece (5.1, 5.2, 5.3) on a first conveying device (2) in a conveying direction (4) at a first speed;
b) rotating a shaft (6) which is arranged at a first distance above a transition region between the first conveying device (2) and a second conveying device (3) which adjoins the first conveying device (2) in the conveying direction (4) and which is driven in the conveying direction (4) at a second speed which is higher than the first speed, by means of a drive (19) at a third speed which is higher than the first speed, wherein at least one driver element (9.1, 9.2) which projects radially from the shaft (6) is arranged on the shaft (6), which driver element (9.1, 9.2) has a contact surface (10.1, 10.2) at a free end thereof which is spaced apart from a surface of the shaft (6) and which driver element (9.1, 9.2) is mounted on the shaft (6) such as to be freely displaceable in the radial direction relative to the shaft (6);
c) grasping the at least one dough piece (5.1, 5.2, 5.3) by the at least one driver element (9.1, 9.2) by resting the contact surface (10.1, 10.2) thereof on the at least one dough piece (5.1, 5.2, 5.3);
d) wherein the at least one dough piece (5.1, 5.2, 5.3) is entrained by the contact surface (10.1, 10.2) of the at least one driver element (9.1, 9.2) resting thereon during the rotational movement of the shaft (6), so that the at least one dough piece (5.1, 5.2, 5.3) is pushed from the first conveying device (2) onto the second conveying device (3) at the third speed.

12. System for producing dough pieces (5.1, 5.2, 5.3), comprising at least one unit (25) for punching or cutting dough pieces (5.1, 5.2, 5.3) from a dough and a device (1) for separating dough pieces according to any one of claims 1 to 10, the device (1) being arranged downstream of the unit (25) for punching or cutting dough pieces (5.1, 5.2, 5.3) from a dough in the conveying direction (4).

13. System according to claim 12, **characterized in that** the unit (25) for punching or cutting dough pieces (5.1, 5.2, 5.3) from a dough is configured such that the at least one dough is punched or cut into substantially triangular dough pieces.

## Revendications

1. Dispositif de séparation de pâtons (5.1, 5.2, 5.3), comportant un premier dispositif de transport (2) et un deuxième dispositif de transport (3) consécutif, sur lesquels des pâtons (5.1, 5.2, 5.3) posés sur ceux-ci peuvent être transportés dans une direction de transport (4), dans lequel le premier dispositif de transport (2) est entraîné à une première vitesse de transport et le deuxième dispositif de transport (3) est entraîné à une deuxième vitesse de transport, laquelle est supérieure à la première vitesse de transport, ainsi qu'un arbre (6) disposé à une première distance au-dessus de la région de transition entre le premier dispositif de transport (2) et le deuxième dispositif de transport (3), lequel peut être déplacé au moyen d'un entraînement (19) dans un mouvement de rotation autour d'un axe longitudinal (8) à une troisième vitesse, laquelle est supérieure à la première vitesse, et lequel s'étend sur toute la largeur des deux dispositifs de transport (2, 3) dans une direction transversale à la direction de transport (4), dans lequel au moins un élément entraîneur (9.1, 9.2) est disposé sur l'arbre (6) en faisant saillie radialement à partir de celui-ci, lequel est doté d'une surface de contact (10.1, 10.2) à une extrémité libre espacée d'une surface de l'arbre (6), **caractérisé en ce que** l'au moins un élément entraîneur (9.1, 9.2) est monté de façon à pouvoir être déplacé dans la direction radiale par rapport à l'arbre (6) et librement sur celui-ci, de telle façon que la surface de contact (10.1, 10.2) de l'au moins un élément entraîneur (9.1, 9.2) se déplace dans la direction radiale vers l'arbre (6) ou à distance de celui-ci du fait du mouvement de rotation de l'arbre (6) autour de l'axe longitudinal (8) en raison de la force de gravité et du poids propre de l'au moins un élément entraîneur (9.1, 9.2), dans lequel l'au moins un élément entraîneur (9.1, 9.2) présente une dimension telle que la surface de contact (10.1, 10.2) peut s'appliquer sur au moins un pâtons (5.1, 5.2, 5.3) posé sur le premier dispositif de transport (2), afin de pousser celui-ci à la troisième vitesse à partir du premier dispositif de transport (2) vers le deuxième dispositif de transport (3).

2. Dispositif de séparation de pâtons (5.1, 5.2, 5.3) selon la revendication 1, **caractérisé en ce que** l'arbre (6) est doté d'un ou de plusieurs éléments entraîneurs (9.1, 9.2), lesquels sont disposés sur l'arbre (6) respectivement à une distance radiale de 360°/n les uns par rapport aux autres, n représentant le nombre des éléments entraîneur (9.1, 9.2) de l'arbre (6).

3. Dispositif selon l'une des revendications 1 ou 2, **caractérisé en ce que** l'au moins un élément entraîneur (9.1, 9.2) est monté sur l'arbre (6) au moyen d'au moins un palier lisse.

4. Dispositif selon les revendications 2 et 3, **caractérisé en ce que** l'arbre (6) présente un nombre pair d'éléments entraîneurs (9.1, 9.2), dans lequel des éléments entraîneurs (9.1, 9.2) disposés respectivement les uns par rapport aux autres à une distance radiale de 180° sur l'arbre (6) sont reliés entre eux par au moins deux barrettes de liaison (14.1, 14.2), lesquelles se situent dans la région des extrémités des éléments entraîneurs (9.1, 9.2) respectifs, dans lequel chacune des barrettes de liaison (14.1, 14.2) est reçue dans un guide coulissant de l'arbre (6).

5. Dispositif selon l'une des revendications 1 à 4, **caractérisé en ce que** le dispositif (1) est doté d'une commande (28) commandant l'entraînement (19) de l'arbre (6) de telle façon que l'arbre (6) effectue un mouvement de rotation d'un angle de 360°/n autour de son axe longitudinal (7) à des intervalles de temps prédéfinis, n représentant le nombre des éléments entraîneurs (9.1, 9.2) disposés sur l'arbre (6).

6. Dispositif selon la revendication 5, **caractérisé en ce que** le dispositif (1) est conçu de telle façon que la surface de contact (10.1, 10.2) de l'au moins un élément entraîneur (9.1, 9.2) vient s'appliquer à une position prédéfinie sur un pâtons (5.1, 5.2, 5.3) posé sur le premier dispositif de transport (2).

7. Dispositif selon l'une des revendications 1 à 6, **caractérisé en ce que** le dispositif (1) est doté d'un moyen de réglage permettant de modifier la première distance.

8. Dispositif selon l'une des revendications 1 à 7, **caractérisé en ce que** l'arbre (6) est relié à l'entraînement (19) par le biais d'une liaison amovible, en particulier par le biais d'un accouplement amovible (13).

9. Dispositif selon l'une des revendications 1 à 8, **caractérisé en ce qu'**un élément de réglage (16.1, 16.2) est disposé sur l'arbre (6), avec lequel le déplacement de l'au moins un élément entraîneur (9.1, 9.2) dans la direction radiale à partir de la surface de l'arbre (6) peut être limité à au moins deux valeurs prédéterminées.

10. Dispositif selon la revendication 9, **caractérisé en ce que** l'élément de réglage (16.1, 16.2) est disposé sur l'arbre (6) de façon à pouvoir être décalé linéairement dans la direction axiale et doté d'au moins deux surfaces de butée, lesquelles sont disposées à différentes distance de la surface de l'arbre (6) et avec lesquelles une région de butée (17) disposée sur l'au moins un élément entraîneur (9.1, 9.2), laquelle fait face à la surface de contact (10.1, 10.2), peut être amenée en butée.

11. Procédé de séparation de pâtons (5.1, 5.2, 5.3) en particulier à l'aide d'un dispositif (1) selon l'une des revendications 1 à 10, comportant les étapes suivantes :
a) transport d'au moins un pâton (5.1, 5.2, 5.3) sur un premier dispositif de transport (2) dans une direction de transport (4) à une première vitesse ;
b) rotation, au moyen d'un entraînement (19) à une troisième vitesse supérieure à la première vitesse, d'un arbre (6) disposé à une première distance au-dessus d'une région de transition entre le premier dispositif de transport (2) et un deuxième dispositif de transport (3) consécutif à celui-ci dans la direction de transport (4), lequel est entraîné à une deuxième vitesse supérieure à la première vitesse dans la direction de transport (4), dans lequel au moins un élément entraîneur (9.1, 9.2) est disposé sur l'arbre (6) en faisant saillie radialement à partir de celui-ci, lequel est doté d'une surface de contact (10.1, 10.2) à une extrémité libre espacée d'une surface de l'arbre (6) et lequel est monté de façon à pouvoir être déplacé dans la direction radiale par rapport à l'arbre (6) et librement sur celui-ci ;
c) saisie de l'au moins un pâtons (5.1, 5.2, 5.3) par l'au moins un élément entraîneur (9.1, 9.2) par application de la surface de contact (10.1, 10.2) de celui-ci sur l'au moins un pâtons (5.1, 5.2, 5.3) ;
d) dans lequel l'au moins un pâtons (5.1, 5.2, 5.3) est entraîné par la surface de contact (10.1, 10.2) appliquée sur celui-ci avec l'au moins un élément entraîneur (9.1, 9.2) lors du mouvement de rotation de l'arbre (6), de telle façon qu'un pâtons (5.1, 5.2, 5.3) est poussé à partir du premier dispositif de transport (2) vers le deuxième dispositif de transport (3) à la troisième vitesse.

12. Système de production de pâtons (5.1, 5.2, 5.3), comportant au moins une unité (25) destinée à estamper ou découper des pâtons (5.1, 5.2, 5.3) à partir d'une pâte ainsi qu'un dispositif (1) destiné à séparer des pâtons selon l'une des revendications 1 à 10, lequel est disposé en aval de l'unité (25) destinée à estamper ou découper des pâtons (5.1, 5.2, 5.3) à partir d'une pâte dans la direction de transport (4).

13. Système selon la revendication 12, **caractérisé en ce que** l'unité (25) destinée à estamper ou découper des pâtons (5.1, 5.2, 5.3) à partir d'une pâte est configurée de telle façon que l'au moins une pâte est estampée ou découpée en des pâtons essentiellement triangulaires.
